(19) Europäisches Patentamt

European Patent Office

Office européen des brevets

(11) **EP 1 343 097 A1**

(12) **EUROPEAN PATENT APPLICATION**

(43) Date of publication:
**10.09.2003 Bulletin 2003/37**

(51) Int Cl.⁷: **G06F 17/30**, H04N 1/32

(21) Application number: **02354039.6**

(22) Date of filing: **04.03.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Hewlett-Packard Company**
**Palo Alto, CA 94304 (US)**

(72) Inventors:
• **Sauvage, Pierre**
  **38450 Notre Dame de Commiers (FR)**

• **Minster, Benoît**
  **38330 St Ismier (FR)**

(74) Representative: **Lloyd, Richard Graham**
  **Hewlett-Packard France**
  **Intellectual Property Section**
  **Etablissement de Grenoble**
  **38053 Grenoble Cedex 09 (FR)**

(54) **Method for embedding of information in media files**

(57) The present invention relates to the identification of electronic files using embedded data and, more particularly, to ways of embedding such data in media files so as to allow subsequent extraction of the embedded data using a general purpose scan facility. The identification of files, particularly of different versions of the same files, is an essential feature of computer systems. Known systems, such as the 'WHAT' command found on HP UX systems are currently used in source code control systems (SCCS) and allow the extraction of manually inserted version strings from software source code files. The present invention aims to provide a method that allows the embedding of such version information and user data strings into media files, such as audio and image files.

FIGURE 1

EP 1 343 097 A1

**Description**

The present invention relates to the incorporating or embedding of user data into electronic files and, more particularly, to techniques for incorporating such data in media files so as to allow subsequent extraction of the user data using a general purpose scan facility.

Computer systems comprise many hundreds or thousands of electronic files that define and determine the functionality of the computer system. In such systems there exists a strong requirement to be able to accurately identify computer files, for example so that existing files can be replaced or updated as required.

Computer file systems generally enable files to have a file name and a file type identifier that identifies the format of the file. Additionally, some file systems may also provide some limited additional data, such as the date the file was created or the date of the last modification. Although the file creation date can be used to identify a difference between two files having the same name and the same extension, in order to identify the version of a particular file it is necessary to manually cross-reference such information with a corresponding list of known versions and known creation dates. Furthermore, the file creation date or file modification dates can be easily changed without affecting the contents of the file, further hindering version identification. Consequently, files systems alone do not generally provide adequate file identification mechanisms.

In the field of digital rights management, the identification of media files is known through the use of watermarking. Watermarking typically enables the detection or prevention of unauthorised copying and distribution of media and other files, and may also be employed for file authentication purposes. Watermarking involves embedding complex security data in a file in such a way that the presence of the security data is not detectable in the binary data of the file. This is to help render the unauthorised detection and tampering of the watermark extremely difficult. In addition, the presence of the watermark must not be human perceptible upon playback or viewing of a media file.

In image files, for example, watermarks are generally embedded by making small changes to, for example, certain luminance values such that the watermark data is embedded into the file without changing the human perception of the image represented by the file. Complex algorithms are used to determine where and how such watermarking data is embedded in order to meet to dual constraints of avoiding visual detection and avoiding machine detection in the binary file data. Watermarks are also developed to be particularly robust and to remain extractable even if, for example, files are resampled, resized, changed from one format to another and so on.

Consequently, the use of watermarking generally requires complex and often proprietary algorithms for inserting watermark data into and for extracting watermark data from media files.

In some operating systems general-purpose scan facilities are provided for extracting embedded identification data from files. In HP UX and UNIX systems, for example, a command known as the 'WHAT' command is provided which scans and analyses the binary data of files and searches for a pair of known delimiting sequences which bound a user data string. If the delimiting sequences are found, the user data string bound thereby is output and displayed to the user. The combination of the delimiting sequences and the user data string is herein referred to as a 'WHAT' string. The user data string is typically used for version control information, although its usage is not limited thereto.

The 'WHAT' command is primarily intended for use in source code control systems (SCCS) to enable version identification and tracking of files in software development environments. A 'WHAT' string may be incorporated into a C language file source file by inserting, for example using a text editor, the following line into an appropriate place in the source code:

char ident[] = "@(#) Version 1.3.2>";

The text editor will place the above-line at a suitable position in the file, thereby allowing the version of the file to be subsequently determined through use of the 'WHAT' command. Since the inserted line is also a valid C construct, the 'WHAT' string will also be present in an object code file resulting from the compilation of the C source file. In this case it is the compiler which determines the position of the 'WHAT' string within the object code file.

One aim of the present invention is to provide a simple technique for incorporating a user data string into media files in a way which does not involve the complexity or the overhead of watermarking techniques. This technique thereby enables the nature, content or version of such media files to be determined other than by listening to or viewing the files, preferably through use of a universal scan facility such as the 'WHAT' command.

According to a first aspect of the present invention there is provided a method of incorporating a data sequence in a media file. The data sequence comprises an identification sequence bounded by predetermined delimiters, and the method determines a position at which the data sequence can be incorporated into the file so as to take into account the human perception of the incorporated data sequence upon playback or viewing of the file. The data sequence is incorporated into the file at the determined position thereby allowing the subsequent output of the identification sequence by a general purpose scan facility, such as the 'WHAT' command, capable of recognizing the delimiters and that acts to output the identification sequence irrespective of the file format or file content outside of the delimiters.

Advantageously, this allows the incorporation of user data strings in media files, and allows use to be made of existing general purpose scan facilities, such as the 'WHAT' command, for subsequent extraction of the incorporated user data string. Furthermore, the inclusion of the user data string does not unduly affect the intended use of the files.

Preferably the step of incorporating the data sequence is achieved by replacing an existing data sequence in the file with the data sequence.

The step of determining the position may also comprise calculating, for each position in the file, the energy difference of the data sequence to be incorporated and the corresponding data sequence to be replaced in the file and choosing the position at which to replace the data sequence according to the calculated energy values.

The step of determining may also further comprise modifying the identification sequence to be incorporated in such a way as to change the binary value of the data sequence without changing the information conveyed thereby and calculating, for the modified data sequence, and for each position in the file, the energy difference of the modified data and the corresponding data sequence to be replaced in the file.

Preferably the general purpose scan facility is the 'WHAT' command, and the delimiting sequences comprise at least one of the ASCII sequences: @(#), ", > and new-line.

The invention is particularly suited for use with media files that are substantially error-tolerant. The type of media files may include audio, video or image files.

According to yet a further aspect, there is provided a method of embedding a data sequence into a file such that the position in which the data is embedded in the file is chosen so as to take into account human perception of the presence of the embedded data, but wherein the embedded data sequence is clearly identifiable within the binary data of the file, so as to allow subsequent extraction of the data sequence by a general purpose scan facility.

A still further aspect provides a method of post-processing a substantially error-tolerant media file to incorporate a data sequence in a media file, wherein the data sequence comprises an identification sequence bounded by predetermined delimiters. A position is thus determined at which the data sequence can be incorporated into the file so as to take into account the human perception of the incorporated data sequence upon playback or viewing of the file and the data sequence is incorporated at the determined position. This allows the subsequent output of the identification sequence by a general purpose scan facility capable of recognizing the delimiters and that acts to output the identification sequence irrespective of the file format or file contents outside of the delimiters.

There is further provided an article of manufacture comprising a program storage medium having computer readable program code means embodied therein for performing a method of incorporating a data sequence in a media file, wherein the data sequence comprises an identification sequence bounded by predetermined delimiters. The computer readable program code means in the article of manufacture includes computer readable program code means for causing a computer to determine a position at which the data sequence can be incorporated into the file so as to take into account the human perception of the incorporated data sequence upon playback or viewing of the file. Also provided is computer readable program code means for causing a computer to incorporate the data sequence at the determined position thereby allowing the subsequent output of the identification sequence by a general purpose scan facility capable of recognizing the delimiters and that acts to output the identification sequence irrespective of the file format or file contents outside of the delimiters.

The present invention takes advantage of the fact that some files, particularly media files, are generally error-tolerant in nature. For example, the .raw audio file format, contains data which is a direct representation of a real audio signal. If the data in the file is changed, the corresponding audio signal generated when playing the file through an appropriate audio player will differ from that of the original signal. Nevertheless, an audio signal may still be generated despite of the errors or changes which have been introduced into the original data.

In other media file formats, such as MPEG video files, video data is stored in a compressed format having a complex structure of error correction codes, interleaving, frames and so on. Such formats are commonly designed to be error tolerant and are resistant, to a reasonable extent, to noise or errors in the data. For example, if data in the file is changed so that it contains errors or noise the video file may still be playable by a media player even though noise or other artefacts may be displayed during playback.

By contrast, many other file formats, such as object code files, are not error-tolerant, and any errors introduced to the data in such files may render such files unusable. With object code files the data in the file represents precise assembly language instructions which define the program the object code represents. Consequently, even minor changes to the data in the file may prevent correct execution of the program or may even cause the program to crash.

Error-tolerant files, such as media files, are therefore generally suitable for embedding user data strings therein through post-processing techniques, whilst non-error tolerant files, such as object code files and word processing documents, must generally only be changed by the application that was used to create them.

The present invention takes advantage of this characteristic of media files to provide for the embedding of user data strings into such media files, for example, for the purpose of subsequent file identification. This may be achieved, for example, through post-processing of the file or may be included, for example, as part of media file generation or editing applications.

Embodiments of the invention will now be described, by way of example, with reference to the accompanying diagrams, in which:

Figure 1 is a flow diagram outlining the main processes involved according to a first embodiment of the present invention; and

Figure 2 is a diagram representing a file and a data sequence to be incorporated into the file.

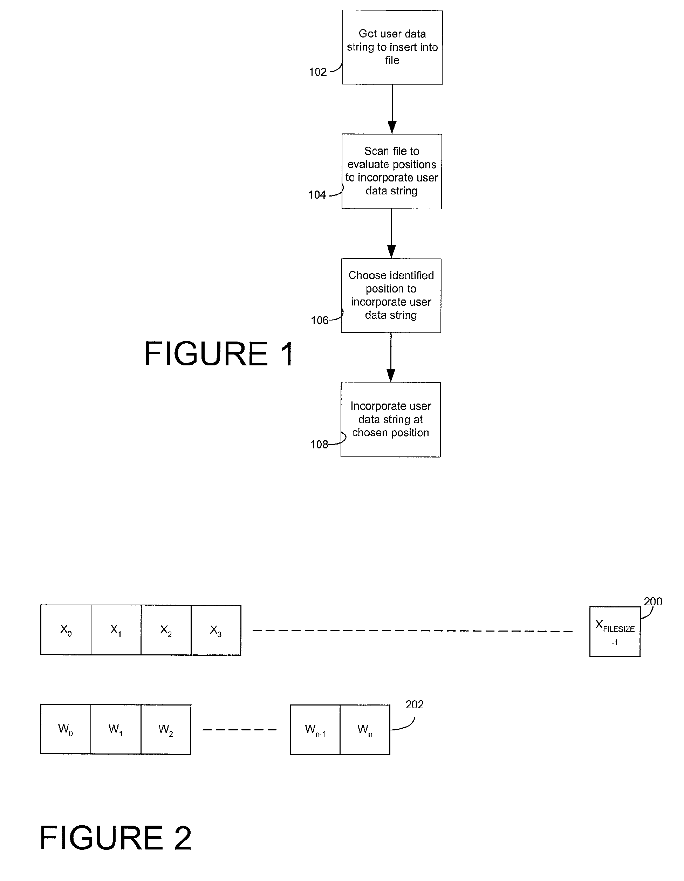

Below is described an embodiment, with reference to Figures 1 and 2, in which a file may be processed to incorporate user data strings therein, for example, for allowing the subsequent identification of the user data string for the file identification purposes.

In a first step, 102, the user data string that is to be incorporated or embedded into the file is obtained through a user interface, text file or other appropriate means. The user data string is combined with known binary delimiting sequences, for example, such as those used in the 'WHAT' command, to allow subsequent extraction of user data string by a general purpose scan facility, such as the known 'WHAT' command. As described previously, the combination of the delimiting sequences and the user data string is herein referred to as a 'WHAT' string. The delimiters used by the 'WHAT' command comprise a first delimiting sequence comprising the ASCII characters @(#), and a second, terminating delimiting sequence which comprises either an ASCII ", >, new-line, \, or null character. Obviously, other delimiting sequences could be used depending on the general purpose scan facility required to subsequently extract the user data string.

The file in which the 'WHAT' string is to be incorporated is then scanned, step 104, in order to evaluate the positions at which the 'WHAT' string can be incorporated into the file. Once the evaluation step is complete, the position at which to incorporate the 'WHAT' string is chosen, step 106, and the 'WHAT' string is incorporated into the file, step 108.

One way in which the evaluation of the positions at which the 'WHAT' string can be incorporated into the file can be determined is described below, with reference to Figure 2.

A file 200 into which a 'WHAT' string 202 is to be incorporated is shown. The file 200 comprises a number of bytes of information, $X_0$ to $X_{FILESIZE-1}$ and the 'WHAT' string data 202 comprises a number of bytes $W_0$ to $W_n$.

It is preferable that the 'WHAT' string 202 is used to replace existing data in the file 200 in such a way that the presence of the 'WHAT' string does not substantially affect human perception upon playback or viewing, as appropriate, of the file. In order to minimise any undesirable effects it is important to carefully determine the position at which the 'WHAT' string is embedded in the file.

One way to achieve this is to calculate an approximation to energy difference of incorporating the 'WHAT' string at different positions within the file, and to mathematically determine the position that should have the least impact in terms of human perception.

This may be achieved, for example, using the following algorithm, in which:

E = approximation to total energy difference
$X_i$ = the value of a byte i in the file
$W_i$ = the value of a byte i in the 'WHAT' string

$$E = (x_i - W_0)^2 + (X_{i+1} - W_1)^2 ... + (X_{i+n} - w_n)^2 \qquad 0 < i < Filesize - n$$

The algorithm is executed for values of i = 0 up to i = Filesize - n

In this way, the effect of incorporating the 'WHAT' string at every position within the file is calculated. Subsequently, the position which corresponds to the lowest energy difference between the original file data and the 'WHAT' string is chosen as the position at which the 'WHAT' string will be incorporated. It should be appreciated, however, that it will not always be possible to incorporate a 'WHAT' string into a file without causing some adverse effects upon playback or viewing of the file.

One advantage of the present embodiment is that minor changes to the 'WHAT' string will usually be placed in the same place in the file. For example, if an initial 'WHAT' string of, say, "@(#)OCMP V1.3" is incorporated into the file using the above described method, a subsequent user string of "@(#)OCMP V1.4" will overwrite the initial user data string since the energy approximation difference will be small.

The length of the 'WHAT' string is not limited, although it will be appreciated that shorter 'WHAT' strings are less likely to be human perceptible upon playback of the file.

The preferred way of incorporating a 'WHAT' string into a file is by replacement of existing data, although those skilled in the art will appreciate that insertion may also be possible in certain circumstances. Care, however, needs to be taken when using insertion since, for example, in the case of audio files, this will have the effect of increasing the length of the audio content of the file.

To further reduce the possibility of the incorporation of the 'WHAT' string being human perceptible in the original file, additional measures can be taken to attempt to improve the matching between the 'WHAT' string and the data which is to be replaced by the 'WHAT' string.

This can be achieved by modifying the ASCII representation of the user data string, without changing the context or content of the user data string. For example, text can be changed from uppercase to lowercase, spaces can be changed to full stops or hyphens, and so on.

For example, if the user data string specified by a user is 'Version 3.0.0', the ASCII representation could be changed, for example, to 'VerSloN-3-0.0'. This substantially changes the binary representation of the user data string, but does not affect the actual information conveyed thereby. In this way it is possible to change the ASCII representation of the user data string in order to achieve better energy matching. This could be implemented, for example, by performing the above-described energy matching calculation for every combination of different ASCII representations for a given user data string.

Although the above description has been described with reference to methods for incorporating user data strings into media files, it should be appreciated that one way in which such methods can be provided is in the form of an article of manufacture comprising a program storage medium having computer readable program code, for example, for use on general purpose computing systems.

Those skilled in the art, however will appreciate that the invention is not limited to use only with the 'WHAT' command but could be equally used with other general purpose scan facilities. Additionally, the invention is not limited to use with media files, and can be used with any substantially error-tolerant files. Furthermore, the implementation of the above-described techniques are not limited for use with the post-processing of files. For example, the same techniques may equally be included with media file generation and editing applications, for directly embedded user data strings into such files.

**Claims**

1. A method of incorporating a data sequence in a media file, wherein the data sequence comprises an identification sequence bounded by predetermined delimiters, comprising:

   determining a position at which the data sequence can be incorporated into the file so as to take into account the human perception of the incorporated data sequence upon playback or viewing of the file; and
   incorporating the data sequence at the determined position thereby allowing the subsequent output of the identification sequence by a general purpose scan facility capable of recognizing the delimiters and that acts to output the identification sequence irrespective of the file format or file contents outside of the delimiters.

2. The method of claim 1, wherein the step of incorporating the data sequence is achieved by replacing an existing data sequence in the file with the data sequence.

3. The method of claim 2, wherein the step of determining the position comprises:

   calculating, for each position in the file, the energy difference of the data sequence to be incorporated and the corresponding data sequence to be replaced in the file; and
   choosing the position at which to replace the data sequence according to the calculated energy values.

4. The method of any claim 3, wherein the step of determining further comprises:

   modifying the identification sequence to be incorporated in such a way as to change the binary value of the data sequence without changing the information conveyed thereby; and
   calculating, for the modified data sequence, and for each position in the file, the energy difference of the modified data and the corresponding data sequence to be replaced in the file.

5. The method of any previous claim, wherein the general purpose scan facility is the 'WHAT' command, and wherein the delimiting sequences comprise at least one of the ASCII sequences: @(#), ", > and new-line.

6. The method of any previous claim, wherein the media files are substantially error-tolerant.

7. The method of any previous claim, wherein the media file is an audio file.

8. The method of any previous claim, wherein the media file is an image file.

9. A method of embedding a data sequence into a file such that the position in which the data is embedded in the file is chosen so as to take into account human perception of the presence of the embedded data, but wherein the embedded data sequence is clearly identifiable within the binary data of the file, so as to allow subsequent extraction of the data sequence by a general purpose scan facility.

**10.** A method of post-processing a substantially error-tolerant media file to incorporate a data sequence in a media file, wherein the data sequence comprises an identification sequence bounded by predetermined delimiters, comprising:

determining a position at which the data sequence can be incorporated into the file so as to take into account the human perception of the incorporated data sequence upon playback or viewing of the file; and
incorporating the data sequence at the determined position thereby allowing the subsequent output of the identification sequence by a general purpose scan facility capable of recognizing the delimiters and that acts to output the identification sequence irrespective of the file format or file contents outside of the delimiters.

**11.** An article of manufacture comprising a program storage medium having computer readable program code means embodied therein for performing a method of incorporating a data sequence in a media file, wherein the data sequence comprises an identification sequence bounded by predetermined delimiters, the computer readable program code means in the article of manufacture including:

computer readable program code means for causing a computer to determine a position at which the data sequence can be incorporated into the file so as to take into account the human perception of the incorporated data sequence upon playback or viewing of the file; and
computer readable program code means for causing a computer to incorporate the data sequence at the determined position thereby allowing the subsequent output of the identification sequence by a general purpose scan facility capable of recognizing the delimiters and that acts to output the identification sequence irrespective of the file format or file contents outside of the delimiters.

FIGURE 1

FIGURE 2

## EUROPEAN SEARCH REPORT

European Patent Office

| Application Number |
|---|
| EP 02 35 4039 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 60589 A (KWAN SOFTWARE ENGINEERING INC) 12 October 2000 (2000-10-12) | 1,2,6-11 | G06F17/30 H04N1/32 |
| Y | * page 3, line 3-19 * <br> * page 4, line 15 - line 34 * <br> * page 9, line 12 - line 25 * | 3,5 | |
| X | WO 01 54396 A (KONINKL PHILIPS ELECTRONICS NV) 26 July 2001 (2001-07-26) | 1,2,6, 9-11 | |
| Y | * page 6, line 7 - line 25; figures * | 3,5 | |
| Y | HEWLETT-PACKARD COMPANY: "HP-UX Reference Release 11.0 User Commands Section 1" HP-UX RELEASE 11.0, vol. 1, October 1997 (1997-10), XP002207607 United States * page 961 * | 5 | |
| Y | US 6 222 932 B1 (RAO RAVISHANKAR ET AL) 24 April 2001 (2001-04-24) * column 7, line 15 - column 10, line 12 * | 3 | |
| | | | **TECHNICAL FIELDS SEARCHED (Int.Cl.7)** |
| A | GB 2 343 818 A (IBM) 17 May 2000 (2000-05-17) * abstract; figures * | 1,9-11 | H04N G06F |

The present search report has been drawn up for all claims

| Place of search | Date of completion of the search | Examiner |
|---|---|---|
| THE HAGUE | 26 July 2002 | Azaustre Maleno, V |

EPO FORM 1503 03.82 (P04C01)

## ANNEX TO THE EUROPEAN SEARCH REPORT
## ON EUROPEAN PATENT APPLICATION NO.

EP 02 35 4039

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2002

| Patent document cited in search report | | Publication date | Patent family member(s) | | Publication date |
|---|---|---|---|---|---|
| WO 0060589 | A | 12-10-2000 | AU<br>TW<br>WO | 3907900 A<br>468157 B<br>0060589 A1 | 23-10-2000<br>11-12-2001<br>12-10-2000 |
| WO 0154396 | A | 26-07-2001 | CN<br>WO<br>EP | 1344462 T<br>0154396 A1<br>1166547 A1 | 10-04-2002<br>26-07-2001<br>02-01-2002 |
| US 6222932 | B1 | 24-04-2001 | NONE | | |
| GB 2343818 | A | 17-05-2000 | CN<br>JP<br>JP | 1249517 A<br>3274667 B2<br>2000172282 A | 05-04-2000<br>15-04-2002<br>23-06-2000 |

EPO FORM P0459

For more details about this annex : see Official Journal of the European Patent Office, No. 12/82